# EUROPÄISCHE PATENTANMELDUNG

(11) **EP 1 798 297 A1**
(43) Veröffentlichungstag der Anmeldung: **20.06.2007**
(21) Anmeldenummer: 05405702.1
(22) Anmeldetag: 16.12.2005
(51) Int. Cl.: C22B 7/02

(54) **Verfahren zu einer Aufbereitung von schwermetallhaltigem Staub**

(71) Anmelder: CTU - Conzepte Technik Umwelt AG, 8400 Winterthur (CH)
(72) Erfinder: Moergeli Rudolf, CH-8708 Männedorf (CH); Dettwiler Bernard, CH-8303 Bassersdorf (CH); Huber Alexander, CH 8400 Winterthur (CH)
(74) Vertreter: Sulzer Management AG

(57) **Zusammenfassung**

Das Verfahren zur Aufbereitung von schwermetallhaltigem Staub dient zum Trennen von Halogenen und Schwermetall. Das Schwermetall ist in Form von wasserlöslichen Halogeniden im Staub enthalten. Zink, das mindestens teilweise in Form von Zinkchlorid vorliegt, ist eine Komponente des Schwermetalls. Ausserdem können Blei und/oder Cadmium sowie auch andere Schwermetalle weitere Komponenten sein. Die Aufbereitung umfasst folgende Schritte:
Herstellen (1a) einer wässrigen Lösung mit dem Staub und einem Fällungsmittel, mit dem Schwermetall in unlösliche, halogenfreie Kristalle eingebunden wird,
und Waschen der aus den Kristallen gebildeten Feststoffphase durch Aufschlämmen (1) mit Waschwasser sowie anschliessendes Trennen (2) des aus wässeriger Phase und Feststoffphase bestehenden Gemisches (12), wobei das Trennen in einem Dekanter (2*) durch Zentrifugieren durchgeführt wird, in welchem Dekanter der Durchlauf der wässerigen Phase so lange dauert, dass durch diesen ein Zentrat (3) gebildet wird, das maximal 20% der Feststoffphase enthält.

## Beschreibung

Die Erfindung betrifft ein Verfahren zu einer Aufbereitung von schwermetallhaltigem Staub sowie Anwendungen des Verfahrens.

Bei einem Schreddern von Autowracks fällt eine Leichtfraktion an, die als Brennstoff und Schwermetallquelle nutzbar ist. Diese Leichtfraktion ist unter den Namen "Schredder-Leichtfraktion", kurz SLF, in Deutschland oder Österreich, "Fluff' in englischsprachigen Ländern und "Resh" in der Schweiz bekannt. Bei einer thermischen Behandlung von Resh-Brennstoff zusammen mit Filterasche aus Kehrrichtverbrennungsanlagen verdampfen Halogene und Schwermetalle, die nach einer Abkühlung in Form von Staub in Tuchfiltern abgeschieden werden. Der Staub ist in der Regel reich an Zink und somit geeignet zu einer Wiederaufbereitung. Er enthält jedoch auch Chlor in Form von Chloriden.

Für die Wiederaufbereitung (mittels "Imperial Smelter" oder Elektrolyse) ist es erforderlich, dass der Chlorgehalt von typischerweise 30% auf deutlich unter 1% abgesenkt wird.

Eine entsprechende Wiederaufbereitung ist auch mit einem zink- und chlorhaltigen Stahlstaub möglich, der als "Wälz-Oxid" bekannt ist. Dieses "Wälz-Oxid" entsteht bei einem "Wälz-Verfahren", das im Zusammenhang mit einer Behandlung von Schrotteisen in Elektrostahlöfen steht.

Die Chloride des schwermetallhaltigen Staubs sind im Wasser bei niedrigem pH-Wert fast vollständig löslich. Sie können also ausgewaschen und so entfernt werden. Einzelne Komponenten des Schwermetalls liegen in oxidischer Form vor und sind unlöslich. Weitere Komponenten, insbesondere Zink, liegen als lösliche Chloride vor. Die in Wasser gelösten Schwermetallchloride lassen sich durch Zusatz von Alkali, d.h. durch Hydrolysieren, als Hydrolysat ausfällen.

Bei Untersuchungen zu möglichen Verfahren, mit denen die erforderliche Trennung von Schwermetall und Halogenen durchgeführt werden könnte, wurde festgestellt, dass das Schwermetall bis auf sehr niedrige Konzentrationen als Hydrolysat anfällt und so in einer Feststoffphase eingebunden ist. Die Halogenide, insbesondere die Chloride, bleiben in der wässerigen Phase gelöst. Die Restmenge an nicht eingebundenem Schwermetall kann problemlos in einer Abwasserreinigung abgetrennt werden. Hingegen stellte sich heraus, dass es sehr schwierig ist, die wässerige Phase von der Feststoffphase mit wirtschaftlich vertretbaren Aufwand mechanisch zu trennen.

Die Kristalle des Hydrolysats sind sehr feinkörnig und bilden Agglomerate, die einen grossen Volumenanteil an wässeriger Phase einschliessen. Daher hat eine Schwerkraftsedimentation nur eine geringe Trennwirkung. Auch die Filtrierbarkeit ist schlecht. Beim Filtrieren entstehen Filterkuchen, die wegen des feinkörnigen Kristallisats einen grossen Strömungswiderstand auf das Filtrat ausüben. Ein Entwässern mit Filterpressen, wie es beispielsweise von einer Behandlung von Galvanikschlämmen her bekannt ist, hat die Nachteile, dass manuelle Arbeit erforderlich ist und dass ein Auswaschen des Filterkuchens schwierig ist. Es wurden diverse weitere Filtrierverfahren in Erwägung gezogen (Bandfilter, Tellerfilter, Autopress-Kompaktfilter, Vakuumbandfilter, filtrierende Zentrifugation), die aber aus wirtschaftlichen Gründen verworfen werden mussten.

Es wurde bei den erwähnten Untersuchungen die Erfahrung gemacht, dass das Kristallisat der zu entwässernden Feststoffphase einen Alterungsprozess durchmacht, nämlich eine "Ostwald-Reifung", die zu einer verbesserten Trenneigenschaft und damit besseren Waschbarkeit führt. Diese Beobachtung sollte wenn möglich ausgewertet werden.

Aufgabe der Erfindung ist es, ein wirtschaftliches Verfahren zu schaffen, mit dem schwermetallhaltiger Staub, der Schwermetall in Form von wasserlöslichen Halogeniden enthält, so aufbereitet wird, dass dabei Halogene und Schwermetall getrennt werden. Diese Aufgabe wird durch das im Anspruch 1 definierte Verfahren gelöst, bei dem ein Dekanter eine zentrale Rolle spielt.

Das Verfahren zur Aufbereitung von schwermetallhaltigem Staub dient zum Trennen von Halogenen und Schwermetall. Das Schwermetall ist in Form von wasserlöslichen Halogeniden im Staub enthalten. Zink, das mindestens teilweise in Form von Zinkchlorid vorliegt, ist eine Komponente des Schwermetalls. Ausserdem können Blei und/oder Cadmium sowie auch andere Schwermetalle weitere Komponenten sein. Die Aufbereitung umfasst folgende Schritte:
Herstellen einer wässrigen Lösung mit dem Staub und einem Fällungsmittel, mit dem Schwermetall in unlösliche, halogenfreie Kristalle eingebunden wird, und Waschen der aus den Kristallen gebildeten Feststoffphase durch Aufschlämmen mit Waschwasser sowie anschliessendes Trennen des aus wässeriger Phase und Feststoffphase bestehenden Gemisches, wobei das Trennen in einem Dekanter durch Zentrifugieren durchgeführt wird, in welchem Dekanter der Durchlauf der wässerigen Phase so lange dauert, dass durch diesen ein Zentrat gebildet wird, das maximal 20% der Feststoffphase enthält:

Die abhängigen Ansprüche 2 bis 8 betreffen vorteilhafte Ausführungsformen des erfindungsgemässen Verfahrens. Anwendungsmöglichkeiten des Verfahrens sind Gegenstand des Anspruchs 9.

Das erfindungsgemässe Verfahren arbeitet kontinuierlich. Ein Auswaschen des Chlorids ist mit wenig manuellem Aufwand möglich (automatische Fahrweise mit wenig Personalbedarf). Mit dem Dekanter, der eine relativ kleine Maschine ist, kann ein grosser Durchsatz erreicht werden

Nachfolgend wird die Erfindung anhand der Zeichnungen erläutert. Es zeigen:
- Fig. 1: ein Blockschema zu einem erfindungsgemässen Verfahren mit zwei Waschstufen,
- Fig. 2: einen Dekanter, mit dem eine Suspension eindickbar ist,
- Fig. 3: eine erste Illustration zur Erläuterung des Eindickens,
- Fig. 4: eine zweite Illustration zur Fortsetzung dieser Erläuterung.

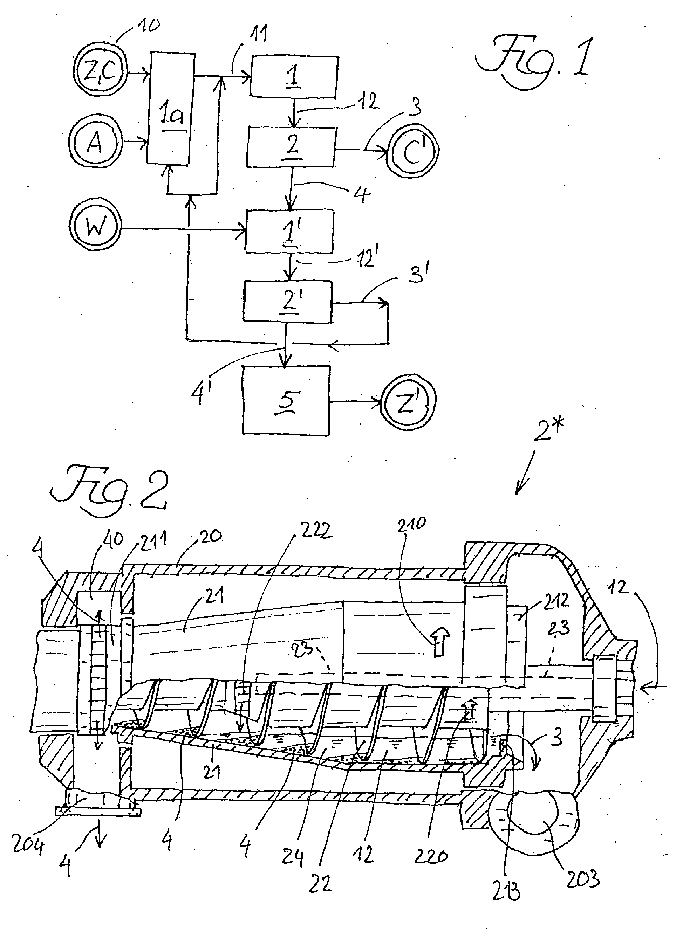

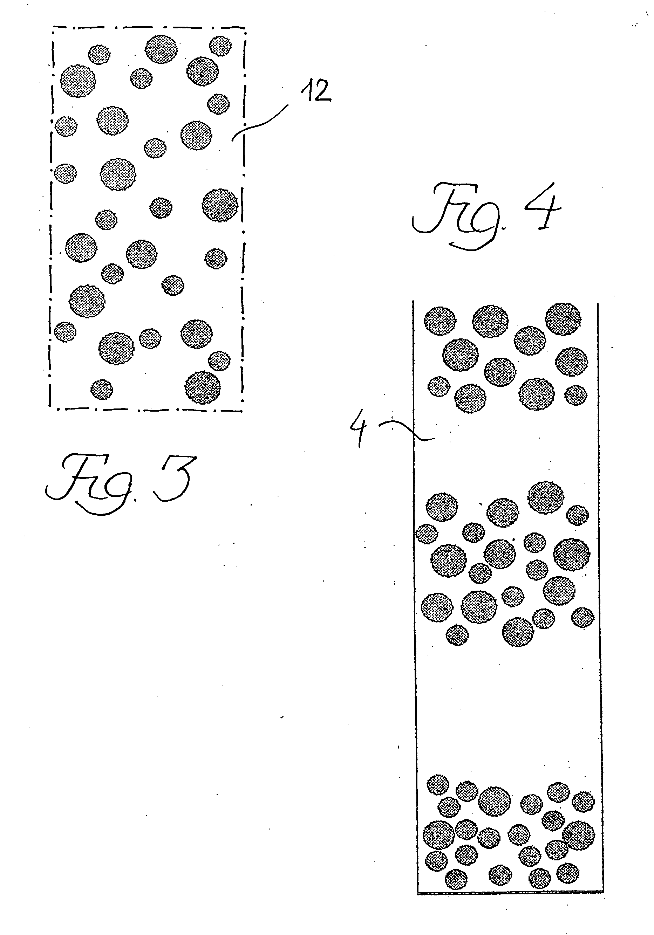

Mit einem Blockschema wird in Fig. 1 das erfindungsgemässe Verfahren mit zwei Waschstufen dargestellt. In diesen Waschstufen erfolgt jeweils ein Aufschlämmen 1 bzw. 1' einer aus Kristallen gebildeten Feststoffphase mit Waschwasser und ein Trennen 2 bzw. 2' des aus wässeriger Phase und Feststoffphase bestehenden Gemisches, wobei das Trennen mittels Dekanter durchgeführt wird (siehe nachfolgende Beschreibung zum Dekanter 2*: Figuren 2 - 4). Es entstehen bei einem Zentrifugieren im Dekanter ein Zentrat 3 bzw. 3', das einen grossen Anteil der wässerigen Phase umfasst, und eine eingedickte Feststoffphase, die nachfolgend als feststoffreiche Fraktion 4 bzw. 4' bezeichnet wird. Jede Stufe umfasst mindestens einen Dekanter.

Als Fällungsmittel zur Erzeugung der Feststoffphase wird ein Alkali verwendet, so dass das Schwermetall durch Hydrolysieren ausgefällt wird. Das Alkali ist vorzugsweise Kalk (CaO) oder Kalkhydrat, kann aber auch Natronlauge oder Soda sein. Das Hydrolysieren wird bei einem pH-Wert von mindestens 9 durchgeführt. Vorzugsweise wird ein Überschuss an Alkali verwendet, so dass der pH-Wert grösser als 10 ist. Bei grösseren pH-Werten entsteht ein besser waschbares Kristallisat.

Ausgangsprodukte des Verfahrens sind ein schwermetallhaltiger Staub 10, der Halogene C (insbesondere Chlor Cl) und Schwermetall Z (insbesondere Zink Zn) enthält, ferner das genannte Alkali A und Frischwasser W. (Blei und/oder Cadmium können weitere Komponenten des Schwermetalls sein.)

Die Endprodukte sind ein Abwasser C', das Halogene C enthält, und eine Fraktion Z' mit Schwermetall Z, in der nur noch kleine Mengen an Halogenen C aus dem Staub 10 enthalten sind. Das Abwasser C' ist das Zentrat 3 der ersten Waschstufe. Es kann in einer Abwasserreinigung weiter behandelt werden.

In einem ersten Schritt 1a wird eine wässerige Aufschlämmung oder Suspension aus Waschwasser, Staub 10 und Alkali A hergestellt. Dieser Schritt 1a kann mit dem Aufschlämmen 1 der ersten Waschstufe kombiniert sein. Das Schwermetall Z, das zuerst in Lösung geht, wird durch das Alkali A in Form von unlöslichen, halogenfreien Kristallen ausgefällt. Es wird dabei Waschwasser verwendet, das eine wässerige Lösung ist, die relativ wenig Halogenide enthält, so dass durch das Lösen der im Staub 10 enthaltenen Halogenide die Halogenkonzentration in der wässerigen Phase um einen Faktor 2 bis 10 zunimmt. Das Waschwasser ist das Zentrat 3' der zweiten Waschstufe.

Es wird die Suspension mit der im Schritt 1a gebildeten Feststoffphase dem Aufschlämmen 1 (Pfeil 11) und anschliessend dem Trennen 2 (Pfeil 12) bzw. direkt dem Trennen 2 (bei der Kombination von 1a und 1) zugeführt. Die feststoffreiche Fraktion 4 gelangt in die zweite Waschstufe, in der sie beim Aufschlämmen 1' mit dem Frischwasser W verdünnt wird. Die zweite ist auch die letzte Waschstufe im Ausführungsbeispiel der Fig. 1. Die beim Trennen 2' eingedickte Feststoffphase 4' wird in einem weiteren Teilverfahren 5 weiter behandelt, beispielsweise getrocknet, so dass ein pulverförmiges Endprodukt Z' entsteht. Bei weiteren Ausführungsbeispielen kann das Teilverfahren 5 zusätzlich mindestens eine weitere Waschstufe umfassen. In diesen Fällen wird das Frischwasser W auch wieder in der letzten Waschstufe eingesetzt und das Zentrat jeder Waschstufe, die eine Vorgängerstufe hat, jeweils als Waschwasser in dieser Vorgängerstufe verwendet.

Der Dekanter 2*, siehe Fig. 2, wird auch Vollmantelschneckenzentrifuge genannt. Er umfasst zur Eindickung des aus wässeriger Phase und Feststoffphase bestehenden Gemisches 12 zwei rotierende Bauteile, die koaxial in einem Gehäuse 20 gelagert angeordnet sind, nämlich eine Zentrifugentrommel 21 und eine Förderschnecke 22, die sich mit einer geringen Differenzdrehfrequenz zur Trommel dreht. Die Rotationsbewegungen sind durch die Pfeile 210 (Trommel) und 220 (Schnecke) angedeutet. Am einen Ende 211 der Trommel 21, vor dem sich die Trommel 21 konisch verjüngt, wird die feststoffreiche Fraktion 4 durch einen Auswurfstutzen 204 ausgetragen; am anderen Ende 212 fliesst das Zentrat 3, nämlich die abgetrennte wässerige Phase, die auch eine feststoffarme Fraktion sein kann, durch einen Ablauf 203 ab. Der Zulauf des einzudickenden Gemisches 12 erfolgt durch ein axiales Rohr 23, dessen Austrittsöffnung in der Mitte einer Einlaufzone 220 liegt. Die Einlaufzone 220 befindet sich in der Nähe des Auswurfstutzens 204 am Eingang einer Trennzone 24, die sich bis zu einem Überlaufwehr 213 beim Ablauf 203 erstreckt. Auf der inneren Trommeloberfläche lagert sich die feststoffreiche Fraktion 4 ab. Sie bildet eine wendelförmige Ablagerung, die durch die Schnecke 22 kontinuierlich im Gegenstrom zu dem Richtung Wehr 213 fliessenden Gemisch 12 aus der Trennzone 24 entfernt wird, wobei das Gemisch 12 des Gegenstroms in einem wendelförmigen, durch die Schnecke gebildeten Kanal fliesst. Die Zentrifugenkennziffer Z (Verhältnis Zentrifugalbeschleunigung zu Erdbeschleunigung g) beträgt 3000 bis 4000. Ein Auswurfraum 40, der beim Auswurfstutzen 204 und innerhalb des Dekantergehäuses 20 angeordnet ist, kann genutzt werden, um zumindest teilweise ein Aufschlämmen mit Waschwasser für eine nachfolgende Waschstufe durchzuführen.

In den Dekantern 2* der zweiten und gegebenenfalls der folgenden Waschstufen soll der Durchlauf des Gemisches 12 so lange dauern, dass ein Zentrat 3 gebildet wird, das maximal 20% der zulaufenden Feststoffphase enthält. Die so im Zentrat 3 mitgeführte Feststoffphase bleibt im Prozess. Das Zentrat 3 der ersten Stufe, das den Prozess verlässt, soll maximal 5%, vorzugsweise höchstens nur 1 % der Feststoffphase enthalten.

Der Einsatz des im erfindungsgemässen Verfahren vorgesehenen Dekanters 2* ist besonders vorteilhaft, wie die nachfolgenden Erläuterungen zeigen: Das zu entwässernde oder einzudickende Gemisch 12 ist eine Suspension, in der die Feststoffbestandteile bestehend aus Einzelkristallen und Agglomeraten unterschiedliche Grösse und Kompaktheit haben. Dies illustriert Fig. 3. Die getönten Kreise symbolisieren die Feststoffbestandteile in der Suspension, wobei die verschieden grossen Flächen andeuten sollen, dass die entsprechenden Bestandteile durch die Zentrifugalkräfte mit unterschiedlicher Wirkung zur Trommeloberfläche getrieben werden. Die feinsten Bestandteile, die durch die kleinen Kreise symbolisiert sind, bleiben am längsten in Suspension und werden daher nicht oder erst in der Nähe des Überlaufwehrs 213 abgelagert. Es entsteht so in der feststoffreichen Fraktion 4 ein Gradient des Feinheitsgrads: an der Peripherie bei der Trommeloberfläche befinden sich die feinsten Bestandteile, im Innenbereich die gröberen. Dies illustriert Fig. 4 durch Darstellung von drei Zonen der feststoffreichen Fraktion 4: zuunterst eine Ablagerungszone an der Periphere, d.h. an der Trommeloberfläche, zuoberst eine Zone des Innenbereichs und in der Mitte eine Zone in einem Zwischenbereich.

Für die gröbsten Feststoffbestandteile besteht die grösste Trennwirkung. Sie werden - vgl. Fig. 4 - auf das feinere Kristallisat aufgepresst und erzeugen so eine Kompaktifizierung der feststoffreichen Fraktion 4. Die feinsten Bestandteile haben die längste Verweilzeit im Dekanter 2* und unterliegen folglich am längsten der Ostwald-Reifung, aufgrund derer die kleinsten Kristalle sich auflösen und entsprechend bei den grösseren die Kristallmenge zunimmt. Die Ostwald-Reifung entfaltet ihre Wirkung besonders bei den Feststoffbestandteilen, die mit dem Zentrat zu einer vorangehenden Waschstufe zurückgeführt werden. Durch diese Rückführung erhöht sich die Verweilzeit in den Waschstufen für die feinsten Bestandteile beträchtlich, was dank der Ostwald-Reifung die Waschqualität wesentlich verbessert. Mit Ausnahme der ersten Waschstufe kann man bei den folgenden Waschstufen mit einem vergrösserten Durchsatz durch den Dekanter 2* den Feststoffanteil im Zentrat 3 relativ hoch vorgeben, um einen optimalen Wascherfolg zu erzielen. Der Durchsatz lässt sich mit einer grössere Menge an Waschwasser vergössern. Dadurch wird gleichzeitig das Waschresultat verbessert.

Die Behandlung des Gemisches 12 mit dem erfindungsgemässen Verfahren wird mit Vorteil bei höheren Temperaturen - zwischen 40 und 90°C - durchgeführt. Die höheren Temperaturen fördern die Ostwald-Reifung.

Nach Abschluss des Waschens kann die mittels Dekanter gewonnene Feststoffphase in einer filtrierenden Vorrichtung, insbesondere einer Filterpresse, zusätzlich entwässert werden. Gegebenenfalls kann nach dieser zusätzlichen Entwässerung die Feststoffphase schliesslich noch getrocknet werden.

Anwendungen des erfindungsgemässen Verfahrens sind bereits genannt worden: Es kann ein zink- und chlorhaltiger Staub aus einer Anlage zur Verwertung einer "Schredder-Leichtfraktion", auch als "Fluff" oder "Resh" bezeichnet, behandelt werden; oder es kann ein zink- und chlorhaltiger Stahlstaub, der als "Wälz-Oxid" bei einem "Wälz-Verfahren" im Zusammenhang mit einer Behandlung von Schrotteisen in Elektrostahlöfen entsteht, behandelt werden.

Es wurden Versuche mit drei Waschstufen bei Umgebungstemperatur durchgeführt. Beim ersten Schritt des Waschens, dem Aufschlämmen 1, wurde ein Verhältnis zwischen den Volumenanteilen an Feststoffphase und wässeriger Phase von 1:10 eingestellt. Beim Trennen 2 erfolgten Abnahmen des Gehalts an Chlorid um die Faktoren a) 3.7, erste Waschstufe, b) 3.8, zweite Waschstufe, und c) 2.6, dritte Waschstufe. Der erreichte Restgehalt an Chlorid lag knapp unter 1%. Ein Zusatz von Flockungsmittel verbesserte die Qualität des Zentrats, was besonders in der ersten Waschstufe genutzt werden kann. Ein Waschen bei 55°C ergab beim Trennen 2 eine wesentlich bessere Eindickung (38 Gew.% statt rund 30 Gew.%) und einen Feststoffgehalt des Zentrats 3, der wesentlich niedriger ist. Eine Ostwald-Reifung über eine Dauer von 15 Stunden führte auch zu deutlichen Verbesserungen.

## Patentansprüche

1. Verfahren zur Aufbereitung von schwermetallhaltigem Staub zwecks Trennung von Halogenen und Schwermetall, wobei Schwermetall in Form von wasserlöslichen Halogeniden im Staub enthalten ist, Zink, das mindestens teilweise in Form von Zinkchlorid vorliegt, eine Komponente des Schwermetalls ist sowie Blei und/oder Cadmium weitere Komponenten sein können und die Aufbereitung folgende Schritte umfasst:
Herstellen (1a) einer wässrigen Lösung mit dem Staub und einem Fällungsmittel, mit dem Schwermetall in unlösliche, halogenfreie Kristalle eingebunden wird,
und Waschen der aus den Kristallen gebildeten Feststoffphase durch Aufschlämmen (1) mit Waschwasser sowie anschliessendes Trennen (2) des aus wässeriger Phase und Feststoffphase bestehenden Gemisches (12), wobei das Trennen in einem Dekanter (2*) durch Zentrifugieren durchgeführt wird, in welchem Dekanter der Durchlauf der wässerigen Phase so lange dauert, dass durch diesen ein Zentrat (3) gebildet wird, das maximal 20% der Feststoffphase enthält.

2. Verfahren nach Anspruch 1, **dadurch gekennzeichnet, dass** das Waschen (1, 2) in mindestens zwei Stufen durchgeführt wird und jede Stufe mindestens einen Dekanter (2*) umfasst, wobei das Zentrat (3) jeder Waschstufe, die eine Vorgängerstufe hat, jeweils als Waschwasser in dieser Vorgängerstufe verwendet wird, dass das Zentrat der ersten Stufe maximal 5%, vorzugsweise maximal 1% der Feststoffphase enthält und dass das Bilden der Feststoffphase und das Aufschlämmen der ersten Stufe in einem gemeinsamen Schritt durchgeführt wird.

3. Verfahren nach Anspruch 1 oder 2, **dadurch gekennzeichnet, dass** als Fällungsmittel ein Alkali verwendet wird, so dass die Feststoffphase durch Hydrolysieren erzeugt wird, und dass das Alkali vorzugsweise Kalk CaO oder Kalkhydrat ist, aber auch Natronlauge oder Soda sein kann.

4. Verfahren nach Anspruch 3, **dadurch gekennzeichnet, dass** das Hydrolysieren bei einem pH-Wert von mindestens 9 durchgeführt wird und dass vorzugsweise ein Überschuss an Alkali verwendet wird, so dass der pH-Wert grösser als 10 ist.

5. Verfahren nach einem der Ansprüche 1 bis 4, **dadurch gekennzeichnet, dass** das aus wässeriger Phase und Feststoffphase bestehende Gemisch (12) in mindestens einer Stufe (1, 2) bei einer Temperatur zwischen 40 und 90°C behandelt wird.

6. Verfahren nach einem der Ansprüche 1 bis 5, **dadurch gekennzeichnet, dass** nach Abschluss des Waschens die mittels Dekanter gewonnene Feststoffphase (4) in einer filtrierenden Vorrichtung, insbesondere einer Filterpresse, zusätzlich entwässert wird.

7. Verfahren nach einem der Ansprüche 1 bis 6, **dadurch gekennzeichnet, dass** nach Abschluss des Waschens die mittels Dekanter gewonnene Feststoffphase (4) - gegebenenfalls nach einer zusätzlichen Entwässerung - getrocknet wird.

8. Verfahren nach einem der Ansprüche 1 bis 7, **dadurch gekennzeichnet, dass** mindestens ein Dekanter (2*) einen Auswurfraum (40) für die Feststoffphase (4) aufweist, in dem zumindest teilweise das Aufschlämmen (1) mit Waschwasser durchgeführt wird.

9. Anwendung des Verfahrens gemäss einem der Ansprüche 1 bis 8,
**dadurch gekennzeichnet, dass**
zink- und chlorhaltiger Staub (Z, C) aus einer Anlage zur Verwertung einer "Schredder-Leichtfraktion", auch als "Fluff' oder "Resh" bezeichnet, behandelt wird; oder dass
zink- und chlorhaltiger Stahlstaub, der als "Wälz-Oxid" bei einem "Wälz-Verfahren" im Zusammenhang mit einer Behandlung von Schrotteisen in Elektrostahlöfen entsteht, behandelt wird.
